# EUROPÄISCHE PATENTSCHRIFT

(11) **EP 2 257 486 B1**
(45) Veröffentlichungstag und Bekanntmachung des Hinweises auf die Patenterteilung: **06.06.2012**
(21) Anmeldenummer: 09727428.6
(22) Anmeldetag: 02.04.2009
(51) Int. Cl.: B65G 45/12, B65G 45/16

(54) **VORRICHTUNG ZUM ABSTREIFEN VON MATERIAL VON EINEM FÖRDERGURT EINES GURTFÖRDERERS**
APPARATUS FOR STRIPPING OFF MATERIAL FROM A CONVEYOR BELT OF A BELT CONVEYOR
DISPOSITIF DE RACLAGE DE MATÉRIAU SUR LA BANDE TRANSPORTEUSE D'UN TRANSPORTEUR À BANDE

(30) Priorität: 03.04.2008 DE 102008017101
(43) Veröffentlichungstag der Anmeldung: 08.12.2010
(73) Patentinhaber: Dünnwald, Wilfried, 47475 Kamp-Lintfort (DE)
(72) Erfinder: Dünnwald, Wilfried, 47475 Kamp-Lintfort (DE)
(74) Vertreter: Cohausz & Florack
(86) Internationale Anmeldenummer: PCT/EP2009/053969
(87) Internationale Veröffentlichungsnummer: WO 2009/121938

(56) Entgegenhaltungen:
- DE-A1- 19 955 421
- DE-C- 801 144
- GB-A- 2 061 214
- US-A- 2 878 926
- US-A1- 2004 222 065

## Beschreibung

Die Erfindung betrifft eine Vorrichtung zum Abstreifen von Material von einem Fördergurt eines Gurtförderers im Bereich der Rundung einer Abwurftrommel, unterhalb der Abwurfstelle des Gurtförderers, mit einem einteilig oder mehrteilig ausgebildeten Abstreifkörper.

Herkömmliche Abstreifvorrichtungen für Gurtförderer, welche im Bereich der Abwurftrommel angeordnet werden, verlaufen parallel zur Trommelachse. Darüber hinaus sind auch Abstreifvorrichtungen für rotierende Trommeln oder Gurtförderer bekannt, bei denen ein Draht als Abstreifkörper verwendet wird, der quer über die Oberfläche der Trommel bzw. schraubengangartig über einen Teil des Umfangs der Trommel gespannt ist. Der Draht ist dabei an einem oder beiden Enden mit einer Spannfeder versehen, die den Draht unter Zugspannung setzt (DE 801 144).

Eine ähnliche Abstreifvorrichtung ist aus der US-Patentschrift 2 878 926 bekannt. Dort werden eine oder zwei parallel zueinander angeordnete Schraubenfedern als Abstreifkörper verwendet, die ebenfalls schraubengangartig über einen Teil des Umfangs der Abwurftrommel des Gurtförderers gespannt sind.

Die aus der DE 801 144 und der US-Patentschrift 2 878 926 bekannten Abstreifvorrichtungen haben sich in der Praxis nicht durchgesetzt, vermutlich weil ihre Reinigungswirkung, insbesondere bei relativ stark anbackendem Fördergut unbefriedigend sein dürfte. US 2004/0222065 A1 beschreibt eine Abstreifvorrichtung gemäß dem Oberbegriff des Anspruchs 1.

Der vorliegenden Erfindung liegt die Aufgabe zugrunde, eine Vorrichtung der eingangs genannten Art zu schaffen, die sich an die Gurtoberfläche optimal anpasst, relativ wenig Platz beansprucht und bei schonender Behandlung des Fördergurtes eine verbesserte Reinigungswirkung bietet.

Gelöst wird diese Aufgabe durch eine Abstreifvorrichtung mit den Merkmalen des Anspruchs 1.

Der einteilig oder mehrteilig ausgebildete Abstreifkörper der erfindungsgemäßen Vorrichtung ist mit einem Tragelement versehen, mittels dem der Abstreifkörper an den Fördergurt gezogen oder ziehbar ist, und zudem mit einem Abhebeelement, welches beabstandet zu dem Tragelement im Abstreifkörper angeordnet ist und den Abstreifkörper trägt, wenn dieser in Gurtlaufrichtung verschoben wird.

Das Abhebeelement ist dabei vorzugsweise ungefedert oder stärker gefedert als das Tragelement an Festpunkten des Gurtförderers befestigt. Bei einer durch einen größeren Gurtschaden oder einen im Fördergurt festsitzenden Fremdkörper verursachten übermäßigen Krafteinwirkung, die tangential zu dem die Trommel umschlingenden Fördergurt auf den Abstreifkörper und das Tragelement einwirkt, wird durch das Abhebeelement im Abstreifkörper eine Reaktionskraft erzeugt, die ein von der Trommel weggerichtetes Drehmoment bewirkt, so dass der Abstreifkörper bzw. ein entsprechend beaufschlagtes Teilsegment des Abstreifkörpers vom Fördergurt abhebt und der Abstreifkörper somit über die schadhafte Stelle des Fördergurtes bzw. den darin festsitzenden Fremdkörper störungsfrei hinweg gleitet.

Die erfindungsgemäße Abstreifvorrichtung reinigt den Fördergurt somit schonender als die bekannten herkömmlichen Abstreifvorrichtungen. Insbesondere ermöglicht die erfindungsgemäße Abstreifvorrichtung aufgrund der Kombination eines Tragelements mit einem zusätzlichen Abhebeelement eine optimale Anpassung des Abstreifkörpers an die zu reinigende Gurtoberfläche und bietet dadurch eine verbesserte Reinigungswirkung. Der Platzbedarf der erfindungsgemäßen Abstreifvorrichtung ist dabei ebenfalls gering und nur unwesentlich größer als der Platzbedarf der aus der US-Patentschrift 2 878 926 bekannten Abstreifvorrichtung.

Das Tragelement ist erfindungsgemäß aus einem Stahlseil und/oder einer Stahlkette gebildet und das Abhebeelement ist vorzugsweise aus einem Stahlseil und/oder einer Stahlkette gebildet. Ein in dieser Art ausgeführtes Tragelement bzw. Abhebeelement ist sehr flexibel und zugleich besonders robust.

Das Tragelement und das Abhebelement können nach einer weiteren vorteilhaften Ausgestaltung der Einfindung mit dem Abstreifkörper einstückig verbunden sein, beispielsweise indem die jeweilige Metallkette in den aus Kunststoff bzw. Elastomer hergestellten Abstreifkörper eingegossen ist.

Alternativ können in den Abstreifkörper rohrförmige Durchführungen oder Aufnahmen für das Tragelement und das Abhebelement eingearbeitet, insbesondere stoffschlüssig eingegossen sein. Nach einer bevorzugten Ausgestaltung der Erfindung ist die dem Tragelement bzw. dem Abhebelement zugeordnete Aufnahme als offener Kanal ausgebildet. Diese Ausgestaltung ist insbesondere dann vorteilhaft, wenn der Abstreifkörper aus einer Vielzahl von Körpersegmenten zusammengesetzt ist. Einzelne verschlissene Körpersegmente können so relativ schnell durch neue Körpersegmente ersetzt werden.

Eine vorteilhafte Ausgestaltung der erfindungsgemäßen Vorrichtung sieht vor, dass der Abstreifkörper mehrere Abstreifelemente aufweist, die Abstreifkanten definieren und eine gegenüber dem Material des Abstreifkörpers erhöhte Schleißfestigkeit besitzen, wobei die Abstreifelemente derart ausgebildet und/oder angeordnet sind, dass sich die Abstreifkanten benachbarter Abstreifelemente teilweise überlappen. Hierdurch wird die Anpassungsmöglichkeit des Abstreifkörpers an die Gurtoberfläche im Bereich der Abwurftrommel des Gurtförderers und damit die Reinigungsleistung der Vorrichtung weiter verbessert.

Besonders bevorzugt ist eine Ausführungsform, bei der der Abstreifkörper der erfindungsgemäßen Vorrichtung über eine Raumkurve verdreht, d.h. schraubengangförmig an den Fördergurt gezogen ist, und bei der das jeweils tiefer liegende Abstreifelement von dem darüber angeordneten Abstreifelement teilweise überdeckt wird. Durch diese überlappende, stufenförmige Anordnung der Abstreifelemente ist sichergestellt, dass ein eventuell in dem Fördergurt festsitzender Fremdkörper oder ein aus der Gurtoberfläche vorstehender, schadhafter Gurtabschnitt nicht an einem einzelnen Abstreifelement hängen bleibt.

Um eine optimale Anpassungsmöglichkeit des Abstreifkörpers an die Gurtoberfläche sicherzustellen, insbesondere wenn der Abstreifkörper über eine Raumkurve verdreht an dem die Abwurftrommel umschlingenden Fördergurt anliegen soll, ist nach einer weiteren Ausgestaltung der erfindungsgemäßen Vorrichtung vorgesehen, dass der Abstreifkörper aus biegeelastischem Material, vorzugsweise aus Kunststoff und/oder Elastomer hergestellt ist.

Um den Verschleiß des Abstreifkörpers bei guter Reinigungswirkung möglichst gering zu halten, ist ferner vorgesehen, dass der Abstreifkörper mindestens zwei dem Fördergurt zugewandte Kantenbereiche aufweist, von denen wenigstens der obere oder der in Laufrichtung des Fördergurtes gesehen erste Kantenbereich durch mindestens ein Abstreifelement gebildet ist, das eine gegenüber dem Material des Abstreifkörpers erhöhte Schleißfestigkeit aufweist. Vorzugsweise ist dieses bzw. sind diese Abstreifelemente aus Hartmetall und/oder Keramik hergestellt.

Nach einer weiteren vorteilhaften Ausgestaltung der Erfindung ist das mindestens eine Abstreifelement mit mindestens einem Federelement versehen. Hierdurch wird einerseits eine gute Anpresswirkung des Abstreifelements an den Fördergurt erzielt, sowie andererseits ein Ausweichen des Abstreifelements beim Anschlag eines im Fördergurt festsitzenden, aus der Gurtoberfläche vorstehenden Fremdkörpers bzw. einer vorstehenden Gurtschadensstelle ermöglicht. Das Federelement weist dabei vorzugsweise mindestens einen schlaufenförmigen Abschnitt auf, der von dem Tragelement, dem Abhebelement oder einem stabförmigen Verbindungselement durchdrungen ist.

Weitere bevorzugte und vorteilhafte Ausgestaltungen der erfindungsgemäßen Vorrichtung sind in den Unteransprüchen angegeben. Nachfolgend wird die Erfindung anhand einer mehrere Ausführungsbeispiele darstellenden Zeichnung näher erläutert. Es zeigen in schematischer Darstellung:
- Fig. 1: eine Abwurftrommel eines Gurtförderers mit einer erfindungsgemäßen Abstreifvorrichtung, in Querschnittansicht;
- Fig. 2: eine perspektivische Längsseitenansicht der Abwurftrommel mit der Abstreifvorrichtung der Fig. 1;
- Fig. 3: einen Abschnitt eines einteilig ausgeführten Abstreifkörpers einer erfindungsgemäßen Vorrichtung, in Längsseitenansicht;
- Fig. 4: eine Querschnittansicht des Abstreifkörpers der Fig. 3;
- Fig. 5: einen Abschnitt eines modular ausgeführten Abstreifkörpers einer erfindungsgemäßen Vorrichtung, in Längsseitenansicht;
- Fig. 6: eine Querschnittansicht des Abstreifkörpers der Fig. 5;
- Fig. 7: einen Abschnitt eines weiteren einteilig ausgeführten Abstreifkörpers einer erfindungsgemäßen Vorrichtung, in Längsseitenansicht;
- Fig. 8: eine Querschnittansicht des Abstreifkörpers der Fig. 7;
- Fig. 9: einen Abschnitt eines weiteren modular ausgeführten Abstreifkörpers einer erfindungsgemäßen Vorrichtung, in Längsseitenansicht;
- Fig. 10: eine Querschnittansicht des Abstreifkörpers der Fig. 9;
- Fig. 11: eine Längsseitenansicht einer Abwurftrommel eines Gurtförderers mit einer erfindungsgemäßen Abstreifvorrichtung, deren Abstreifkörper schraubengangförmig über einen Teil des Umfangs der Abwurftrommel an den Fördergurt gezogen ist;
- Fig. 12: die Abwurftrommel mit der Abstreifvorrichtung der Fig. 11, in Querschnittansicht;
- Fig. 13: einen Abschnitt eines einteilig ausgeführten Abstreifkörpers, der über eine Raumkurve verdreht an den Fördergurt gezogen wird, in Längsseitenansicht;
- Fig. 14: eine Querschnittansicht des Abstreifkörpers der Fig. 13;
- Fig. 15: eine vergrößerte Darstellung eines Details der Fig. 13;
- Fig. 16: einen Abschnitt eines weiteren einteilig ausgeführten Abstreifkörpers, der über eine Raumkurve verdreht an den Fördergurt gezogen wird, in Längsseitenansicht;
- Fig. 17: eine Querschnittansicht des Abstreifkörpers der Fig. 16;
- Fig. 18 bis 21: eine Abwurftrommel eines Gurtförderers mit einer weiteren erfindungsgemäßen Abstreifvorrichtung, deren aus einer Vielzahl von aneinandergereihten Teilkörpern gebildeter Abstreifkörper schraubengangförmig über einen Teil des Umfangs der Abwurftrommel an den Fördergurt gezogen ist, in Längsseitenansicht, Stirnseitenansicht, Draufsicht und perspektivischer Darstellung;
- Fig. 22: eine vergrößerte Darstellung eines Details der Fig. 21;
- Fig. 23: eine Querschnittansicht eines Teilkörpers eines weiteren Abstreifkörpers;
- Fig. 24: den Teilkörper der Fig. 23, in perspektivischer Ansicht;
- Fig. 25: drei Teilkörper eines weiteren Abstreifkörpers, in perspektivischer Ansicht;
- Fig. 26: eine Querschnittansicht eines Teilkörpers der Fig. 25;
- Fig. 27: drei Teilkörper eines weiteren Abstreifkörpers, in perspektivischer Ansicht;
- Fig. 28: eine Querschnittansicht eines Teilkörpers der Fig. 27;
- Fig. 29: fünf unterschiedlich gestaltete Abstreifteilkörper einer erfindungsgemäßen Vorrichtung, in Querschnittansicht; und
- Fig. 30: fünf unterschiedlich gestaltete Abstreifteilkörper einer erfindungsgemäßen Vorrichtung, in Querschnittansicht.

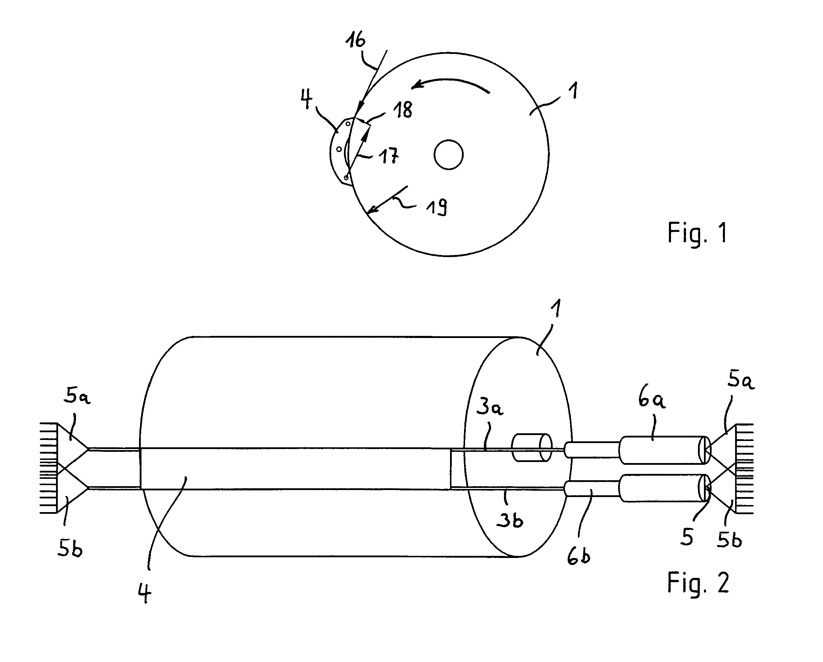

In den Figuren 1 und 2 ist eine Abwurf- bzw. Umlenktrommel 1 eines Gurtförderers dargestellt. Die Laufrichtung des Fördergurtes bzw. die Drehrichtung der Trommel 1 ist durch den Pfeil angegeben.

An der Rundung der gurtumschlungenen Abwurftrommel 1, und zwar unterhalb des Bereichs, an dem das Fördergut (nicht gezeigt) vom Fördergurt abgeworfen wird, ist ein einteilig oder mehrteilig ausgebildeter Abstreifkörper 4 angeordnet. Durch den Abstreifkörper 4 wird noch am Gurt haftendes Fördergut vom Gurt abgetrennt.

Die Länge des Abstreifkörpers 4 entspricht etwa der Axiallänge der Trommel 1, zumindest aber der Breite des Fördergurtes. Der Abstreifkörper 4 ist aus biegeelastischem Material, vorzugsweise aus Kunststoff und/oder Elastomer hergestellt. Der Abstreifkörper 4 ist mit einem Tragelement 3a, zum Beispiel einer Metallkette, insbesondere Stahlkette versehen, mittels dem er an den Fördergurt gezogen ist. Des Weiteren ist der Abstreifkörper 4 mit einem Abhebeelement 3b versehen, welches ebenfalls als Metall- bzw. Stahlkette ausgeführt sein kann.

Die Metallketten 3a, 3b sind beabstandet zueinander in das biegeelastische Material des Abstreifkörpers 4 eingegossen. Die als Tragelement 3a dienende Metallkette ist vorzugsweise im Bereich der oberen Längskante des Abstreifkörpers 4 angeordnet, während die als Abhebeelement 3b dienende Metallkette im Bereich der unteren Längskante des Abstreifkörpers 4 angeordnet ist. Innerhalb des Abstreifkörpers 4 verlaufen die beiden Metallketten 3a, 3b im Wesentlichen parallel zueinander.

Das Tragelement 3a und das Abhebeelement 3b sind an einem Tragrahmen (Ausleger) oder an dem Tragrahmen im Bereich der Drehlager der Abwurftrommel 1 angebrachten Seitenverkleidungsplatten (nicht gezeigt) des Gurtförderers befestigt. Die Befestigungspunkte 5a, 5b sind in dem dargestellten Ausführungsbeispiel so angeordnet, dass der längliche Abstreifkörper 4 bzw. die Metallketten 3a, 3b im Wesentlichen parallel zur Drehachse der Abwurftrommel 1 verlaufen.

Die als Tragelement 3a dienende Metallkette ist in Zugrichtung über eine Zugfeder oder Gasdruckfeder 6a an einem der Festpunkte 5a befestigt. Ebenso kann auch die als Abhebeelement 3b dienende Metallkette in Zugrichtung über eine Zugfeder oder Gasdruckfeder 6b an einem der Festpunkte 5b befestigt sein (vgl. Fig. 2). Die Federwirkung der Zugfeder bzw. der Gasdruckfeder 6a, 6b ist einstellbar. Es ist vorgesehen, dass das Abhebelement 3b stärker gefedert, d.h. mit größerer Federkonstante (Rückstellkraft) als das Tragelement 3a an Festpunkten 5b des Gurtförderers befestigt ist. Die zumindest an einem Ende des Tragelements 3a angebrachte Gasdruckfeder oder Zugfeder 6a dämpft die an dem Abstreifkörper 4 im Betrieb auftretenden Schwingungen.

Anstelle von Ketten können auch Stahlseile für das Tragelement 3a und das Abhebelement 3b der erfindungsgemäßen Vorrichtung verwendet werden. An mindestens einem der beiden dem Tragelement 3a bzw. dem Abhebeelement 3b zugeordneten Festpunkte 5a bzw. 5b sind Spannmittel, zum Beispiel auf einem Gewindebolzen aufgeschraubte Spannhaken zum Spannen des Tragelement 3a bzw. Abhebeelements 3b vorgesehen. Die Festpunkte 5a, 5b bzw. die dort angeordneten Befestigungselemente weisen Sollbruchstellen auf.

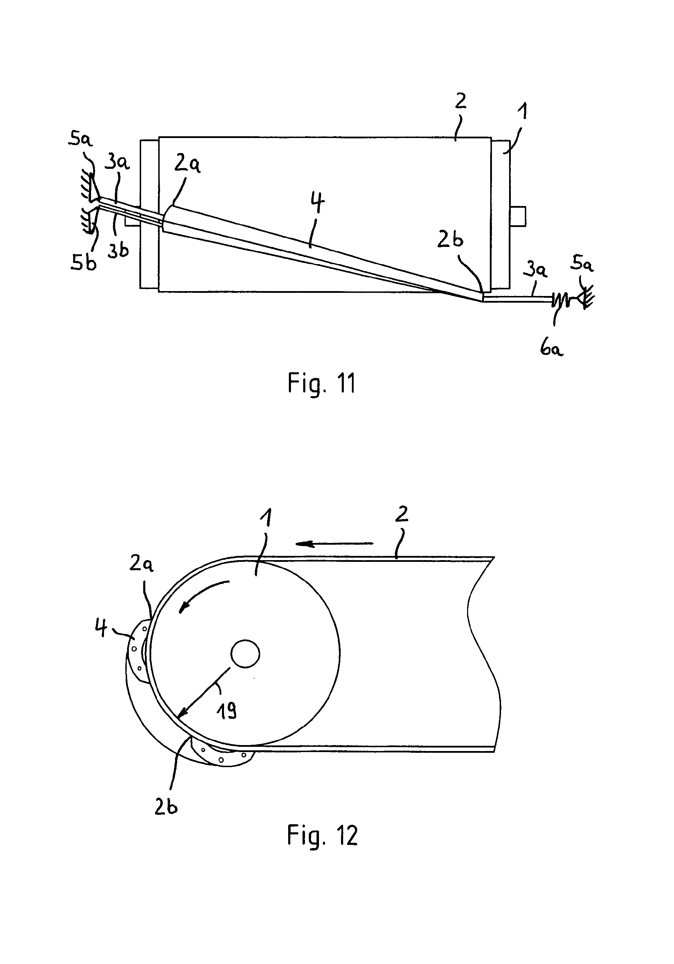

Das Tragelement 3a trägt im Normalbetrieb der Abstreifvorrichtung die eigentlichen Rückstellkräfte. Bei übermäßiger Krafteinwirkung auf den Abstreifkörper 4, beispielsweise durch einen größeren Gurtschaden oder durch einen im Fördergurt festsitzenden Fremdkörper, wird der Abstreifkörper 4 in Gurtlaufrichtung verschoben. Dies ist möglich durch die kraftbegrenzende Feder 6a, über die das Tragelement 3a an dem (unteren) Festpunkt 5a befestigt ist (siehe Fig. 2 und 11). Wird der Abstreifkörper 4 in Gurtlaufrichtung verschoben, so beginnt das Abhebeelement 3b zu tragen, weil dieses nicht oder deutlich stärker gefedert an dem Festpunkt 5b befestigt ist. Das dort angeordnete Befestigungselement 5 weist vorzugsweise mindestens eine Sollbruchstelle auf.

Aufgrund der Form des Abstreifkörpers 4, dessen Anordnung relativ zu der Abwurftrommel 1 und der erfindungsgemäßen Anordnung von Tragelement 3a und Abhebeelement 3b ergibt sich durch die tangential wirkende Überschusskraft und der im Abstreifkörper 4 erzeugten Reaktionskraft ein Drehmoment, welches bewirkt, dass der Abstreifkörper 4 oder ein entsprechend beaufschlagtes Teilsegment 4d des Abstreifkörpers 4 vom Fördergurt 2 abhebt und der Abstreifkörper 4 über die schadhafte Stelle des Fördergurtes 2 hinweg gleitet. Dies ist in Fig. 1 anhand von Kraftvektoren skizziert, wobei der Fördergurt in Fig. 1 der Einfachheit halber nicht dargestellt ist. Der Vektor 16 entspricht der tangential wirkenden Überschusskraft, während der Vektor 17 die im Abstreifkörper 4 erzeugte Reaktionskraft bezeichnet; und der Vektor 18 entspricht in der zeichnerischen Darstellung bei einem angenommenen Trommel- bzw. Fördergurtradius 19 einem linksdrehenden Moment.

Der Abstreifkörper 4 ist so gestaltet, dass das Tragelement 3a und das Abhebelement 3b, die vorzugsweise jeweils aus einem Stahlseil oder einer Stahlkette bestehen, im Abstreifkörper 4 integriert sind und keinen zusätzlichen Platz benötigen. Hierdurch ist es möglich, den Abstreifkörper 4 sehr flach bauend, beispielsweise leistenförmig auszuführen. Die sehr flach bauende Kontur des Abstreifkörpers 4 verhindert einen die Funktionsweise der Abstreifvorrichtung einschränkenden Materialaufbau am Abstreifkörper.

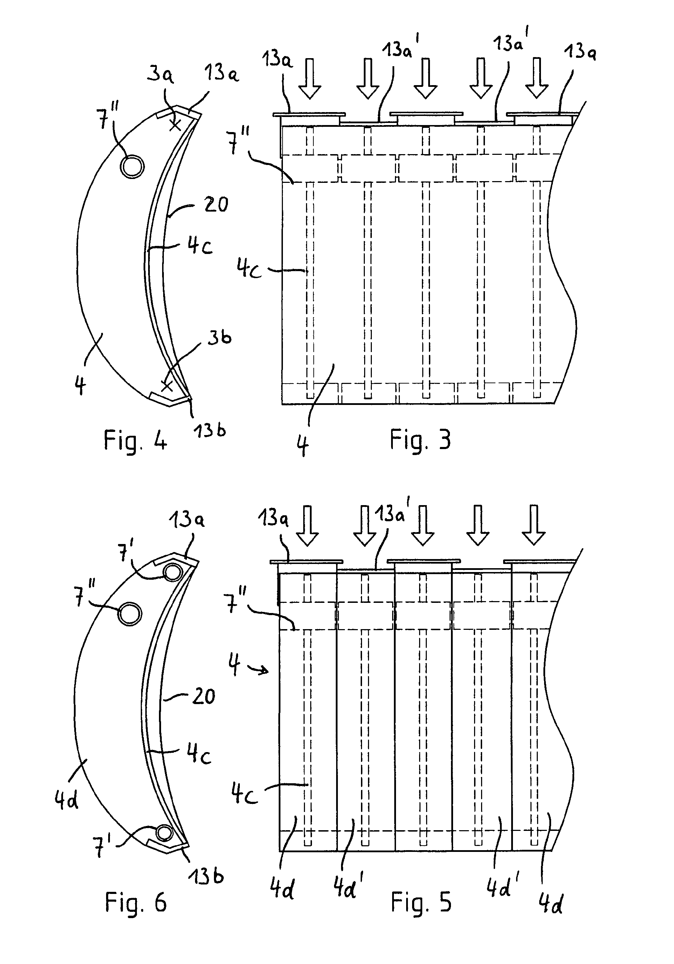

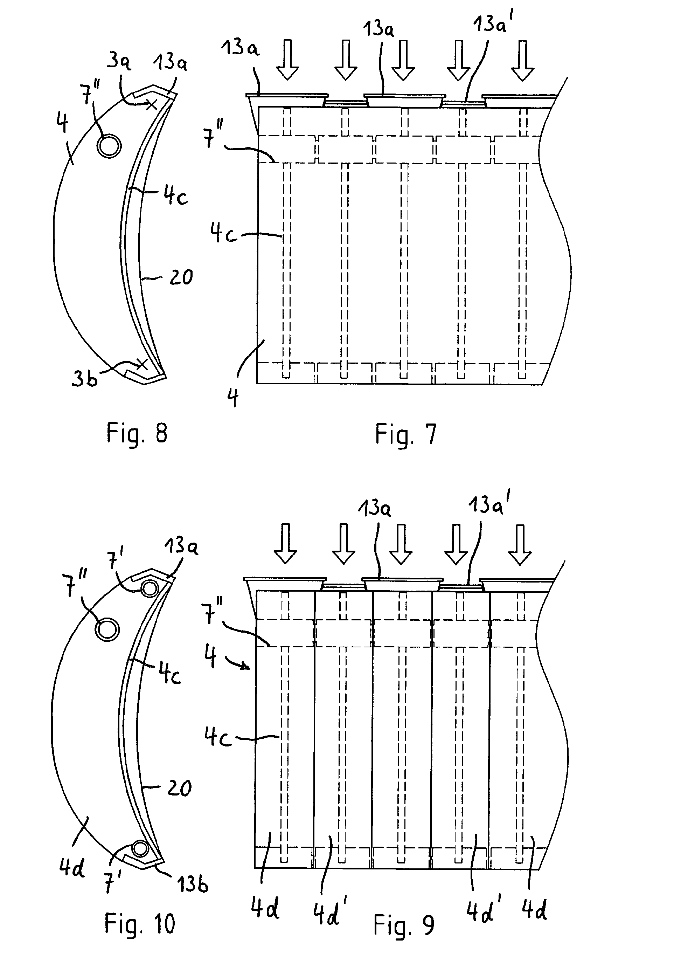

Das Tragelement 3a und das beabstandet dazu angeordnete Abhebelement 3b sind stoffschlüssig oder formschlüssig mit dem Abstreifkörper 4 verbunden. Zur formschlüssigen Verbindung sind in dem Abstreifkörper 4 Aufnahmen 7 ausgebildet oder rohrförmige Durchführungen 7' eingebettet, durch die das Tragelement 3a bzw. das Abhebeelement 3b verlaufen. Der einteilig oder mehrteilig ausgebildete Abstreifkörper 4 ist aus Kunststoff oder gummiähnlichem Material gefertigt. Die Aufnahmen 7 bzw. Durchführungen 7' werden dabei mit dem Material des Abstreifkörpers 4 umspritzt oder umgossen (vgl. Fig. 6 und 10).

Alternativ können das Tragelement 3a und das Abhebelement 3b auch in das Material des Abstreifkörpers 4 eingegossen sein, so dass eine stoffschlüssige Verbindung vorliegt (vgl. Fig. 4 und 8).

Der Abstreifkörper 4 weist zwei dem Fördergurt 2 zugewandte Kantenbereiche auf, die jeweils durch ein oder mehrere Abstreifelemente 13a, 13b gebildet sind, welche eine gegenüber dem Material des Abstreifkörpers 4 erhöhte Schleißfestigkeit aufweisen. Die Abstreifelemente (Schleißelemente) 13a, 13b sind aus Hartmetall und/oder Keramik gefertigt.

Ferner ist in der Zeichnung zu erkennen, dass der Abstreifkörper 4 an seiner dem Fördergurt zugewandten Seite eine sich in Längsrichtung des Abstreifkörpers 4 erstreckende Vertiefung 20 aufweist. Die Vertiefung 20 ist muldenförmig ausgebildet und hat ein bogenförmiges oder V-förmiges Querschnittsprofil.

Die schleißfesten Abstreifelemente 13a, 13b können auf verschiedene Weise mit dem biegeelastischen Material des Abstreifkörpers 4 verbunden sein. Beispielsweise können die Abstreifelemente 13a, 13b rückseitig vorspringende Verankerungselemente aufweisen, die von dem Material des Abstreifkörpers 4 stoffschlüssig umgossen sind. Bei dem in den Figuren 3 und 4 dargestellten Ausführungsbeispiel ist der Abstreifkörper 4 einteilig ausgeführt. Er weist an seinem der Gurtlaufrichtung zugewandten Kopfbereich Abstreifelemente 13a aus verschleißfestem Material auf, die wechselweise, rechtwinklig zur Längsachse des Abstreifkörpers 4 vor- und zurückspringend angeordnet sind. Die Gurtlaufrichtung ist durch Pfeile angedeutet. Die vorspringenden Abstreifelemente (Schleißelemente) 13a überlappen dabei die dazwischen, zurückgesetzt angeordneten Abstreifelemente 13a'.

Des Weiteren sind auch an dem unteren Längskantenbereich des Abstreifkörpers 4 Schleißelement 13b vorgesehen. Die oberen und unteren Schleißelemente 13a, 13b sind durch mehrere Federelemente 4c miteinander verbunden, beispielsweise verschweißt, wobei das jeweilige Federelement 4c in dem Material des Abstreifkörpers 4 stoffschlüssig eingegossen ist. Die Federelemente 4c bestehen beispielsweise aus Federstahl.

In dem Abstreifkörper 4 sind zudem Distanzhülsen 7" mit geringem Abstand zur Biegung eingegossen. Die Distanzhülsen 7" dienen als Aufnahme bzw. Führung eines seil- oder stabförmigen Spannelements (nicht gezeigt).

Das in den Figuren 5 und 6 dargestellte Ausführungsbeispiel unterscheidet sich von dem Ausführungsbeispiel gemäß den Figuren 3 und 4 dadurch, dass der Abstreifkörper 4 modular ausgeführt ist, d.h. er ist aus einer Vielzahl von relativ schmalen Teilkörpern (Einzelelementen) 4d, 4d' zusammengesetzt. Diese Ausgestaltung ermöglicht eine einfache Längenanpassung des Abstreifkörpers 4 an die Breite des zu reinigenden Fördergurtes 2 durch Hinzufügen oder Entfernen entsprechender Teilkörper 4d, 4d'. Die schmalen Einzelelemente 4d, 4d' des Abstreifkörpers 4 umfassen zwei verschiedene Größen, und zwar eine Größe (4d') mit einem zurückgesetzten Abstreifelement (Schleißelement) 13a', und eine Größe (4d) mit einem demgegenüber vorspringenden Abstreifelement (Schleißelement) 13a.

An den unteren Längskanten sind wiederum Schleißelemente 13b angeordnet, wobei das obere und das untere Schleißelement 13a bzw. 13a', 13b jedes Teilkörpers 4d, 4d' durch einen Draht 4c oder dergleichen aus Federstahl verbunden sind. Das Feder- bzw. Verbindungselement 4c ist in dem jeweiligen Teilkörper 4d, 4d' eingegossen. Ferner sind in dem jeweiligen Teilkörper 4d, 4d' Distanzhülsen oder Schlauch- oder Rohrabschnitte 7', 7" eingegossen, die zur Aufnahme bzw. Führung eines seil- oder stabförmigen Spannelements (nicht gezeigt) bzw. zur Durchführung von als Tragelement 3a bzw. Abhebelement 3b dienenden Stahlketten oder Stahlseilen bestimmt sind.

Die Figuren 7 bis 10 zeigen zwei Ausführungsbeispiele, die weitgehend den zuvor beschriebenen Ausführungsbeispielen entsprechen. Im Unterschied zu den Ausführungsbeispielen gemäßen den Figuren 3 bis 6 sind hier die der Gurtlaufrichtung zugewandten Kopfbereiche des Abstreifkörpers 4 trapezförmig ausgebildet. Die vorspringenden Abstreifelemente (Schleißelemente) 13a überlappen wiederum die dazwischen, zurückgesetzt angeordneten Abstreifelemente 13a'.

Die Figuren 11 und 12 zeigen eine bevorzugte Ausführungsform, bei welcher der Abstreifkörper 4 in seiner Längsachse um ca. 90° verdreht (tordiert) gefertigt oder verdrehbar ist, insbesondere biegsam ist und/oder teilweise vorgebogen gefertigt ist, so dass er an der gurtumschlungenen Abwurftrommel 1 über eine Raumkurve verläuft. Das Tragelement 3a und Abhebelement 3b in Form von Stahlseilen oder Stahlketten sind in dem Profil des Abstreifkörpers 4 integriert und benötigen keinen zusätzlichen Platz. Der Abstreifkörper 4 wird nicht, wie bei anderen herkömmlichen Bandabstreifern an den Fördergurt 2 gedrückt, sondern mittels des Tragelements 3a und des Abhebeelements 3b an den Gurt 2 herangezogen. Dies wird erreicht, indem der längliche Abstreifkörper 4 auf der Rundung der vom Fördergurt 2 umschlungenen Abwurftrommel 1 über eine Raumkurve wirkt, wobei der Abstreifkörper 4 schräg und nicht im rechten Winkel zur Gurtlaufrichtung am Gurt 2 anliegt. Der Abstreiferkörper 4 ist so angeordnet und ausgerichtet, dass der Anlaufpunkt 2a des Gurtes 2 am Abstreifkörper 4 in Höhe oder nahe der Höhe der halben Umschlingung des Gurtes 2 an der Abwurftrommel liegt (vgl. Fig. 11 und 12). Der Ablaufpunkt 2b liegt wenige Zentimeter vor dem Übergangsbereich von runder Gurtführung auf der Abwurftrommel zur geraden Gurtführung des ablaufenden Gurtes 2.

Der Abstreifkörper 4 ist derart ausgebildet, dass er sich sowohl der Biegung des Gurtes 2 bzw. dem Radius 19 der Trommel 1, als auch der TorsionNerdrehung um etwa 90° über seine Länge anpasst, so dass er über seine gesamte Länge den Gurt 2 reinigen kann. Bei tangentialer Ausrichtung des Tragelements 3a in Bezug auf die Rundung des die Abwurftrommel 1 umschlingenden Fördergurtes 2 tritt nahezu keine Krafteinleitung in den Fördergurt 2 an dessen Randbereichen auf, so dass der Gurt 2 schonend mit relativ geringem Anpressdruck gereinigt wird. Bei der in den Figuren 11 und 12 dargestellten Ausführungsform erfolgt die Krafteinleitung im Wesentlichen begrenzt auf den mittleren Bereich des Gurtes 2, wo das Anhaften von Fördergut üblicherweise auftritt.

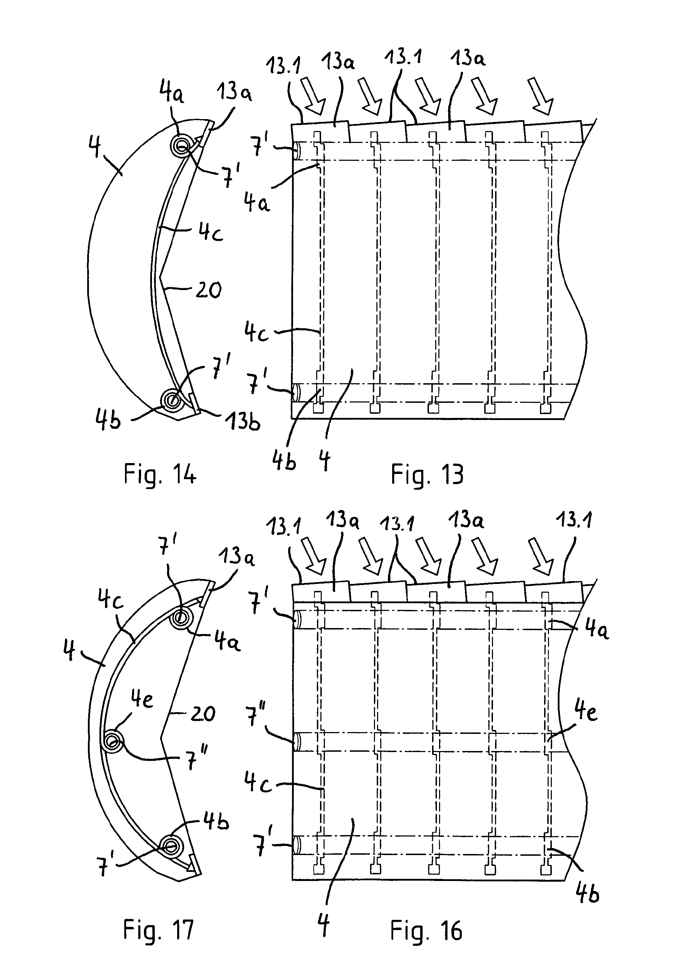

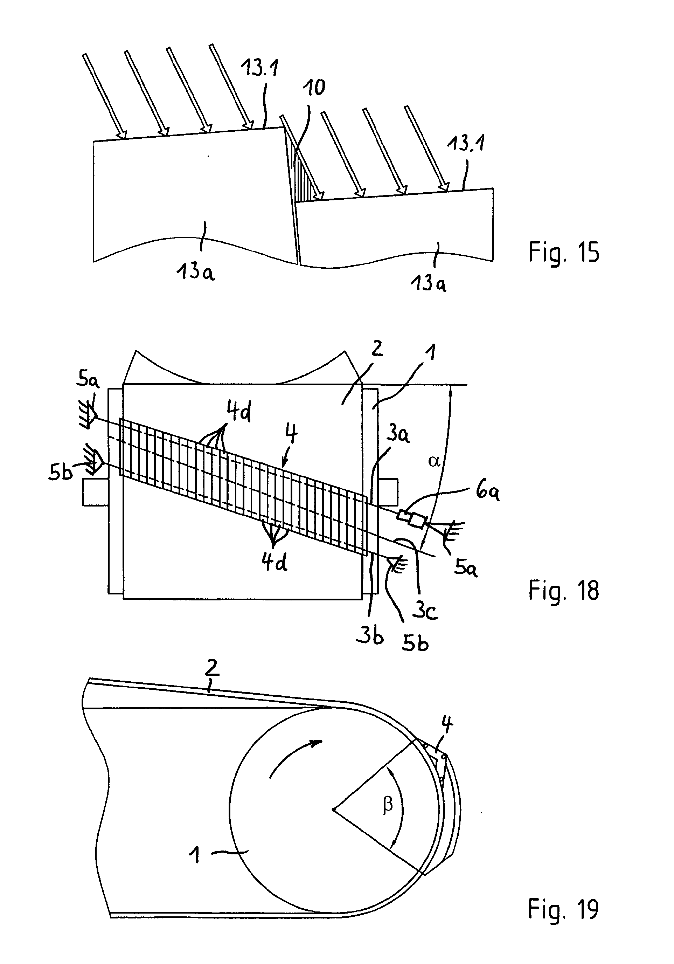

Der an der Rundung der gurtumschlungenen Abwurftrommel 1, schräg zur Gurtlaufrichtung anliegende Abstreifkörper 4 ist gemäß dem in den Figuren 13 und 14 dargestellten Ausführungsbeispiel wiederum mit einer Vielzahl von Abstreifelementen (Schleißelementen) 13a versehen, die der Gurtlaufrichtung schräg zugewandte Abstreifkanten 13.1 definieren. Die an der oberen Längskante des Abstreifkörpers 4 angeordneten Abstreifelemente 13a sind dabei derart geformt und ausgerichtet, dass sich die Abstreifkanten 13.1 benachbarter Abstreifelemente 13a teilweise überlappen. Diese Überlappung stellt eine optimale Reinigung des Fördergurtes 2 sicher und kann daher auch als "Reinigungsüberlappung" bezeichnet werden. Die vergrößerte Darstellung in Fig. 15 von zwei benachbarten Schleißelementen 13a mit deren der Gurtlaufrichtung schräg zugewandten Abstreifkanten verdeutlicht, dass die Abstreifkante 13.1 des tiefer angeordneten Schleißelements 13a teilweise im "Schatten" 10 des höher angeordneten Schleißelements liegt. Diese teilweise Überlappung stellt zudem sicher, dass sich ein aus der Gurtoberfläche vorstehender Gurtschaden oder Fremdkörper nicht an einem einzelnen Schleißelement 13a verhaken kann.

Durch die muldenförmige Vertiefung 20 des Abstreifkörpers 4 an seiner dem Gurt 2 zugewandten Seite wird erreicht, dass der Abstreifkörper 4 nur mit den relativ kleinflächigen Schleißelementen 13a, 13b an dem Gurt 2 anliegt, wobei die Schleißelemente 13a, 13b obere und untere Längskanten des Abstreifkörpers 4 definieren. Ähnlich wie bei den Ausführungsbeispielen gemäß den Figuren 5, 6, 9 und 10 ist in die jeweiligen Teilkörper (Einzelelemente) 4d ein Federstahlelement 4c integriert, das fest mit den Schleißelementen 13a, 13b verbunden ist.

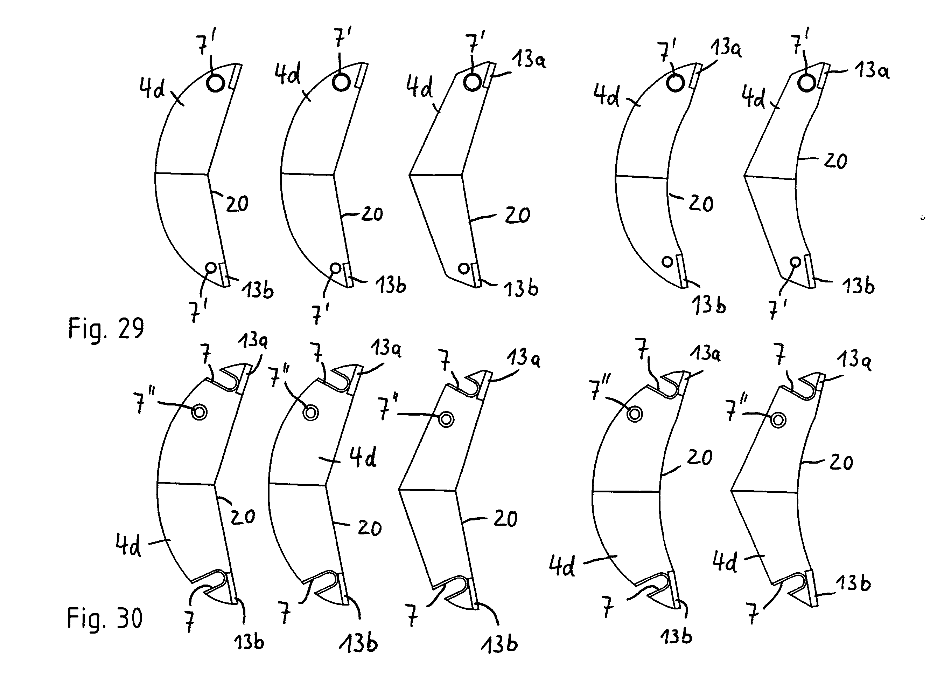

Weitere unterschiedliche Konturen (Querschnittprofile) des Abstreifkörpers 4 bzw. von Teilkörpern 4d, die aneinandergereiht den Abstreifkörper 4 bilden, sind in Fig. 29 dargestellt.

Des Weiteren besteht eine bevorzugte Ausführungsform darin, dass das die Schleißelemente 13a, 13b verbindende Federelement 4c mindestens einen schlaufenförmigen Abschnitt 4a, 4b, 4e aufweist. In dem in den Figuren 13 und 14 dargestellten Ausführungsbeispiel weist das jeweilige Federelement 4c zwei schlaufenförmige Abschnitte 4a, 4b, die von Hülsen 7' durchdrungen sind, welche der Aufnahme von Stahlseilen oder Stahlketten als Trägerelement 3a bzw. Abhebeelement 3b dienen.

Bei dem in den Figuren 16 und 17 gezeigten Ausführungsbeispiel ist zwischen den Hülsen oder Rohren 7', die der formschlüssigen Aufnahme des Trägerelements 3a und des Abhebeelements 3b dienen, ein weiteres Rohr oder ein Schlauch 7" angeordnet und im Abstreifkörper 4 integriert. Dieses Rohr bzw. dieser Schlauch 7" dient der Aufnahme eines zusätzlichen Stütz- oder Verbindungselements, das ebenfalls aus einer Stahlkette, einem Stahlseil oder einem Metallstab bestehen kann. Das Federelement 4c weist dementsprechend einen dritten schlaufenförmigen Abschnitt 4e auf, der von dem Rohr oder Schlauch 7" durchdrungen ist.

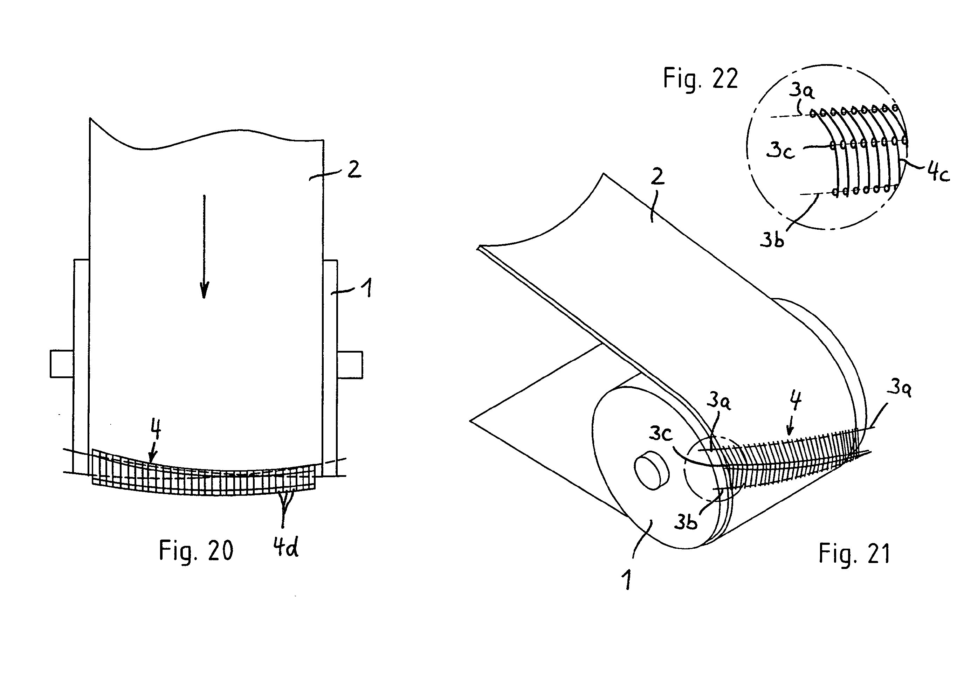

Bei dem in den Figuren 18 bis 21 dargestellte Ausführungsbeispiel ist der biegsame, flexible Abstreifkörper 4 über eine Raumkurve verdreht an den Fördergurt 2 gezogen, wobei der Abstreifkörper 4 aus einer Vielzahl relativ schmaler, aneinandergereihten Teilkörpern (Einzelelementen) 4d gebildet ist.

Die Krafteinleitung erfolgt durch eine kraftbegrenzende Feder, vorzugsweise eine schwingungsdämpfende Gasdruckfeder 6a, die am tiefer liegenden Abstreifkörperende angreift. Dieser Krafteinleitungsbereich ist mit einer Sollbruchstelle versehen, die bei Überschreitung einer bestimmten Maximalkraft für ein Ablösen des Abstreifkörpers 4 von dem betreffenden Befestigungspunkt 5a sorgt.

Die Einzelelemente 4d des Abstreifkörpers 4 haben ein im Wesentlichen satteldachförmiges Querschnittprofil. Sie sind aus Kunststoff oder Gummi gegossen oder gespritzt. An den dem Fördergurt 2 zugewandten Anlagebereichen weist jedes Einzelelement 4d Platten 13a, 13b aus schleißfester Keramik oder Hartmetall auf, die dazu bestimmt sind, auf dem Gurt 2 zu gleiten. Die an dem Abstreifkörper 4 oben positionierten Schleißelemente 13a bilden Abstreifkanten zur Reinigung des Gurtes 2 von noch anhaftendem Fördergut. Die Länge des Abstreifkörpers 4 ist so bemessen, dass er die Seitenkanten des zu reinigenden Fördergurtes 2 geringfügig überragt.

In das Material der jeweiligen Einzelelemente 4d des Abstreifkörpers 4 sind Hülsen oder Schlauchabschnitte 7' eingebettet, wobei durch die beiden nahe den Längskanten des Abstreifkörpers 4 angeordneten Hülsen oder Schlauchabschnitte 7' Stahlketten als Trage- bzw. Abhebeelement 3a, 3b hindurchgeführt sind, die über Befestigungsmittel, insbesondere über mit Zugfedern oder Gasdruckfedern 6a gekoppelten Spannelemente, an Festpunkten 5a, 5b eines die Abwurftrommel 1 tragenden Stahlrahmens befestigt sind.

Unterhalb des Firstes des satteldachförmigen Einzelelements 4d ist in dessen Material eine weitere Hülse 7" oder ein weiterer Schlauchabschnitt eingebettet. In diese axial fluchtenden Hülsen bzw. Schlauchabschnitte 7" ist ein Metallstab oder Stahlseil eingeführt. Mittels dieses Metallstabes oder Stahlseiles werden alle Einzelelemente (Teilkörper) 4d miteinander verbunden und vom ersten Teilkörper bis zum letzten Teilkörper leicht verspannt. Wesentliche Aufgabe dieses Stütz- oder Spannelements ist es, die Einzelsegmente 4d des Abstreifkörpers 4 spaltfrei miteinander zu positionieren und eine stützende Wirkung auf das jeweilige Nachbarelement 4d auszuüben. Wird ein Einzelelement 4d beispielsweise durch einen Gurtschaden oder eine Gurtverbindungsnaht angehoben, so wird diese Bewegung zum Teil auf das Nachbarelement 4d übertragen und dieses teilweise mit angehoben. Der Gurtschaden oder die Gurtverbindungsnaht läuft so schadlos unter dem Abstreifkörper 4 hindurch.

Der Abstreifkörper 4 ist über das Tragelement 3a und das sich dazu im Wesentlichen parallel erstreckende Abhebeelement 3b so an die vom Fördergurt 2 umschlungene Abwurftrommel 1 gezogen, dass das stabförmige Verbindungselement 3c schräg zur Gurtlaufrichtung verläuft und mit der parallel zur Drehachse der Abwurftrommel 1 verlaufenden, im Wesentlichen horizontalen Gurtoberseite einen Winkel α im Bereich von ca. 15° bis 25°, vorzugsweise ca. 20° einschließt (vgl. Fig. 18). Die vom Fördergurt 2 abzustreifenden Schmutzpartikel treffen somit schräg auf die Abstreifkante 13.1 der Abstreifelemente 13a. Ferner ist der Abstreifkörper 4 so an dem Fördergurt 2 angeordnet, dass er sich über einen Umschlingungswinkel β im Bereich von ca. 70° bis 80°, beispielsweise ca. 76° erstreckt (vgl. Fig. 19).

Die durch axiales Spannen des Tragelements 3a (und des Abhebelements) bewirkte Anpresskraft des Abstreifkörpers 4 ist in den Außenbereichen (Randbereichen) des Gurtes 2 nahezu kraftfrei, da das Tragelement 3a im Bereich der beiden Enden des Abstreifkörpers 4 tangential zur Trommel 1 geführt ist. Im Hauptarbeitsbereich des Abstreifkörpers 4, nämlich in der Gurtmitte, ist die Anpresskraft am größten, jedoch durch die am Tragelement 3a einstellbare Zugkraft definiert. Sehr vorteilhaft ist diese über eine Raumkurve an der Abwurftrommel 1 verlaufende Abstreifvorrichtung bei Gurtförderern einsetzbar, deren Fördergurt 2 aus geklammerten oder mit Hakenverbindungen verbundenen Fördergurtstücken gebildet ist. Die Verbindungsnaht des Gurtes 2 taucht beim Auflaufen auf das obere Ende bzw. Einzelelement 4d des Abstreifkörpers 4 nahezu kraftfrei unter diesem hinweg. Die vom benachbarten Einzelelement 4d ausgehende Stützfunktion stellt sicher, dass die Verbindungsnaht des Gurtes 2 schadfrei an dem Abstreifkörper 4 entlang gleitet.

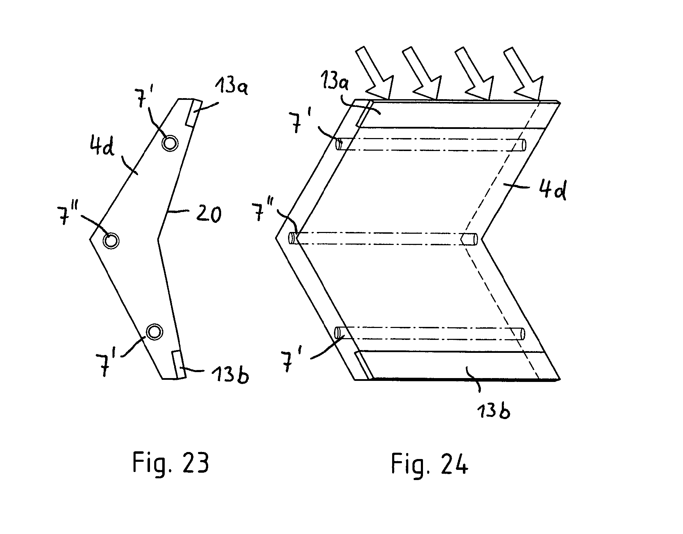

In den Figuren 23 und 24 ist ein Teilkörper (Einzelelement) 4d eines Abstreifkörpers 4 dargestellt, der durch Aneinanderreihen einer Vielzahl solcher Teilkörper 4d zusammengesetzt wird. Der Teilkörper 4d hat ein im Wesentlichen satteldachförmige Querschnittsprofil und ist an seiner oberen und unteren Längskante mit den Fördergurt berührenden Schleißelementen 13a, 13b aus verschleißfestem Material versehen. In das demgegenüber biegsame, weniger verschleißfeste Material des Teilkörpers 4d sind Rohre oder Schlauchabschnitt 7', 7" integriert, die im Wesentlichen parallel zu den Längskanten des Teilkörpers 4d verlaufen und der Aufnahme (Durchführung) des Tragelements, des Abhebelements sowie eines Stützelements dienen.

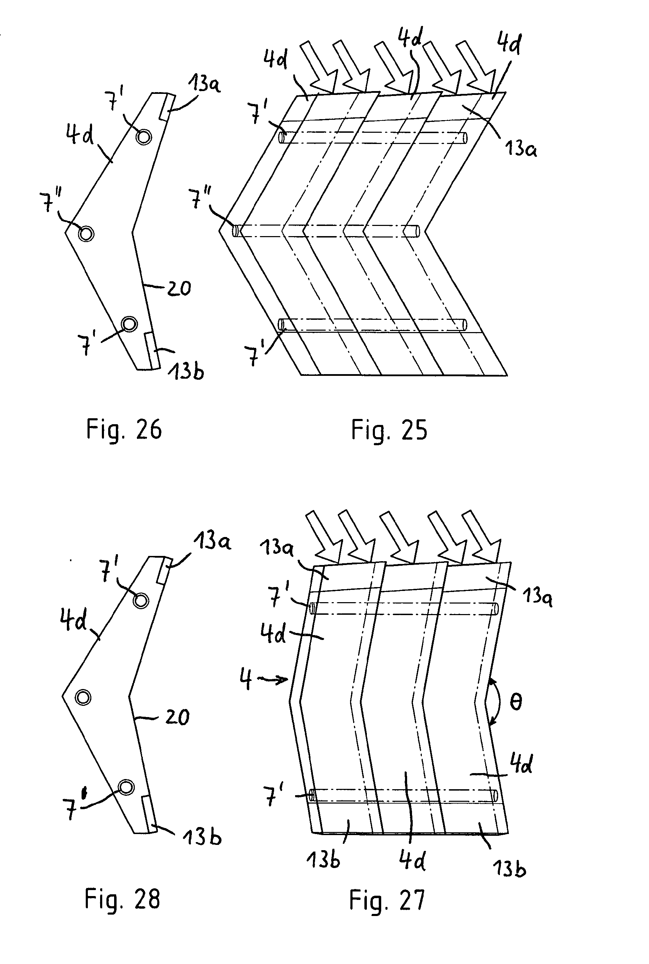

Die Figuren 25 bis 28 zeigen weitere Ausführungsbeispiele von aus schmalen Einzelelementen 4d zusammengesetzten Abstreifkörpern 4 für eine erfindungsgemäße Abstreifvorrichtung. Die Einzelelemente 4d sind wiederum satteldach- oder V-förmig ausgebildet und mit Schleißelementen 13a, 13b versehen. Der Spreizwinkel θ der Einzelelementschenkel hängt vom Radius 19 der Abwurftrommel 1 ab. Der Spreizwinkel θ kann nahe bei 180° liegen, beispielsweise 170° betragen. Die oberen, der Gurtlaufrichtung zugewandten Schleißelemente 13a dienen als Abstreifelemente und definieren gerade ausgebildete Abstreifkanten 13.1. Die Abstreifkanten 13.1 benachbarter oder aufeinanderfolgender Abstreifelemente 13a sind stufenförmig versetzt zueinander angeordnet. Die Einzelelemente 4d des Abstreifkörpers 4 sind dabei schuppenartig aneinandergereiht.

Bei den in Fig. 30 skizzierten Ausführungsbeispielen von verschiedenen Querschnittsprofilen des Abstreifkörpers 4 sind die Aufnahmen 7 für das Tragelement und das Abhebeelement als offene Kanäle ausgebildet. Diese Ausführungsform gestattet einen schnellen Wechsel des Abstreifkörpers 4 bzw. von Einzelelementen 4d des Abstreifkörpers 4. Diese Variante ist insbesondere dann von Vorteil, wenn der Verschleiß von Einzelelementen 4d des Abstreifkörpers 4 aufgrund fehlender Schleißelemente hoch ist und/oder das Wechselintervall kurz ist.

## Patentansprüche

1. Vorrichtung zum Abstreifen von Material von einem Fördergurt () eines Gurtförderers im Bereich der Rundung einer Abwurftrommel (1), unterhalb der Abwurfstelle des Gurtförderers, mit einem einteilig oder mehrteilig ausgebildeten Abstreifkörper (4), wobei
der Abstreifkörper (4) mit einem aus einem Stahlseil und/oder einer Metallkette gebildeten Tragelement (3a) versehen ist, mittels dem der Abstreifkörper (4) an den Fördergurt (2) gezogen oder ziehbar ist, **dadurch gekennzeichnet, dass** der Abstreifkörper zudem mit einem Abhebeelement (3b) versehen ist, welches beabstandet zu dem Tragelement (3a) im Abstreifkörper (4) angeordnet ist und den Abstreifkörper (4) trägt, wenn dieser in Gurtlaufrichtung verschoben wird.

2. Vorrichtung nach Anspruch 1,
**dadurch gekennzeichnet, dass** das Abhebeelement (3b) aus einem Stahlseil und/oder einer Metallkette gebildet ist.

3. Vorrichtung nach Anspruch 1 oder 2,
**dadurch gekennzeichnet, dass** das Tragelement (3a) in einer in dem Abstreifkörper (4) ausgebildeten Aufnahme (7, 7') angeordnet ist.

4. Vorrichtung nach einem der Ansprüche 1 bis 3,
**dadurch gekennzeichnet, dass** das Abhebelement (3b) in einer in dem Abstreifkörper (4) ausgebildeten Aufnahme (7, 7') angeordnet ist, die beabstandet zu dem Tragelement (3a) oder einer dem Tragelement (3a) zugeordneten Aufnahme (7, 7') angeordnet ist.

5. Vorrichtung nach Anspruch 3 oder 4,
**dadurch gekennzeichnet, dass** die Aufnahme (7) als offener Kanal ausgebildet ist.

6. Vorrichtung nach einem der Ansprüche 1 bis 5,
**dadurch gekennzeichnet, dass** das Tragelement (3a) in Zugrichtung mit einer Zugfeder und/oder einer Gasdruckfeder (6a) versehen ist.

7. Vorrichtung nach einem der Ansprüche 1 bis 6,
**dadurch gekennzeichnet, dass** das Tragelement (3a) und/oder das Abhebeelement (3b) an einem eine Sollbruchstelle aufweisenden Befestigungselement (5) befestigt sind.

8. Vorrichtung nach einem der Ansprüche 1 bis 7,
**dadurch gekennzeichnet, dass** der Abstreifkörper (4) aus biegeelastischem Material, vorzugsweise Kunststoff und/oder Elastomer hergestellt ist.

9. Vorrichtung nach einem der Ansprüche 1 bis 8,
**dadurch gekennzeichnet, dass** der Abstreifkörper (4) mindestens zwei dem Fördergurt (2) zugewandte Kantenbereiche aufweist, von denen wenigstens der obere oder wenigstens der in Laufrichtung des Fördergurtes gesehen erste Kantenbereich durch ein oder mehrere Abstreifelemente (13a, 13a') gebildet ist, welches/welche eine gegenüber dem Material des Abstreifkörpers (4) erhöhte Schleißfestigkeit aufweist/aufweisen.

10. Vorrichtung nach Anspruch 9,
**dadurch gekennzeichnet, dass** das mindestens eine Abstreifelement (13a, 13a') mit mindestens einem Federelement (4c) versehen ist.

11. Vorrichtung nach Anspruch 10,
**dadurch gekennzeichnet, dass** das Federelement (4c) mindestens einen schlaufenförmigen Abschnitt (4a, 4b, 4e) aufweist.

12. Vorrichtung nach Anspruch 11,
**dadurch gekennzeichnet, dass** der schlaufenförmige Abschnitt (4a, 4b, 4e) des Federelements (4c) von dem Tragelement (3a), dem Abhebelement (3b) oder einem stab- oder seilförmigen Verbindungselement (3c) durchdrungen ist.

13. Vorrichtung nach einem der Ansprüche 1 bis 12,
**dadurch gekennzeichnet, dass** der Abstreifkörper (4) mehrere Abstreifelemente (13a, 13a') aufweist, die Abstreifkanten (13.1) definieren und eine gegenüber dem Material des Abstreifkörpers (4) erhöhte Schleißfestigkeit besitzen, wobei die Abstreifelemente (13a, 13a') derart ausgebildet und/oder angeordnet sind, dass sich die Abstreifkanten (13.1) benachbarter Abstreifelemente (13a, 13a') teilweise überlappen.

14. Vorrichtung nach Anspruch 13,
**dadurch gekennzeichnet, dass** die Abstreifkanten (13.1) benachbarter oder aufeinanderfolgender Abstreifelemente (13a, 13a') stufenförmig versetzt zueinander angeordnet sind.

15. Vorrichtung nach Anspruch 14,
**dadurch gekennzeichnet, dass** die Abstreifkanten (13.1) aufeinanderfolgender Abstreifelemente (13a, 13a') wechselweise vor- und zurückspringend zueinander angeordnet sind.

## Claims

1. A device for stripping off material from a conveyor belt (2) of a belt conveyor in a portion of the curvature of a discharge drum (1) below a discharge location of the belt conveyor, comprising a stripping body (4) that is configured integral in one piece or configured in plural pieces, wherein the stripping body (4) is provided with a carrying element (3a) formed from a steel cable and/or a metal chain through which the stripping body (4) is pulled or pullable against the conveyor belt (2), **characterized in that** the stripping body (4) is further provided with a lift-off element (3b) which is disposed in the stripping body (4) and offset from the carrying element (3a) and supports the stripping body (4) when the stripping body is moved in belt running direction.

2. The device according to claim 1, **characterized in that** the lift-off element (3b) is formed from a steel cable and/or a metal chain.

3. The device according to claim 1 or 2, **characterized in that** the carrying element (3a) is disposed in a receiver (7, 7ʹ) configured in the stripping body (4).

4. The device according to one of the claims 1 to 3, **characterized in that** the lift-off element (3b) is disposed in a receiver (7, 7') configured in the stripping body (4), wherein the receiver (7, 7ʹ) is configured offset from the carrying element (3a) or offset from a receiver (7, 7') associated with the carrying element (3a).

5. The device according to claim 3 or 4, **characterized in that** the receiver (7) is configured as an open channel.

6. The device according to one of the claims 1 to 5, **characterized in that** the carrying element (3a) is provided with a tension spring and/or a gas pressure spring (6a) in pull direction.

7. The device according to one of the claims 1 to 6, **characterized in that** the carrying element (3a) and/or the lift-off element (3b) are attached at an attachment element (5) including a rated break point.

8. The device according to one of the claims 1 to 7, **characterized in that** the stripping body (4) is made from elastically bendable material, preferably plastic material and/or elastomeric material.

9. The device according to one of the claims 1 to 8, **characterized in that** the stripping body (4) includes at least two edge portions oriented towards the conveyor belt (2), wherein at least an upper edge portion or at least the first edge portion in running direction of the conveyor belt is formed by one or plural stripping elements (13a, 13a'), which have increased wear resistance compared to a material of the stripping body (4).

10. The device according to claim 9, **characterized in that** the at least one stripping element (13a, 13a') is provided with at least one spring element (4c).

11. The device according to claim 10, **characterized in that** the spring element (4c) includes at least one loop shaped section (4a, 4b, 4e).

12. The device according to claim 11, **characterized in that** the loop shaped section (4a, 4b, 4e) of the spring element (4c) is penetrated by the carrying element (3a), the lift-off element (3b) or a rod shaped connection element (3c) or a cable shaped connection element (3c).

13. The device according to one of the claims 1 to 12, **characterized in that** the stripping body (4) includes plural stripping elements (13a, 13a') which define stripping edges (13.1) and which have improved wear resistance compared to a material of the stripping body (4), wherein the stripping elements (13a, 13aʹ) are configured and/or arranged, so that the stripping edges (13.1) of adjacent stripping elements (13a, 13a') overlap partially.

14. The device according to claim 13, **characterized in that** the stripping edges (13.1) of adjacent or sequential stripping elements (13a, 13a') are disposed offset from one another in steps.

15. The device according to claim 14, **characterized in that** the stripping edges (13.1) of sequential stripping
elements (13a, 13a') are disposed alternatively recessed and protruding relative to one another.

## Revendications

1. Dispositif de raclage de matériau sur la bande de transport d'un transporteur à bande, dans la région d'un arrondi d'un tambour de jetée (1), au-dessous du lieu de jetée du transporteur à bande, avec un corps de raclage (4), qui est formé d'une pièce ou de plusieurs pièces, sachant que le corps de raclage (4) est pourvu d'un élément de support (3a), formé à partir d'un câble d'acier et / ou d'une chaîne métallique, au moyen duquel le corps de raclage (4) est amené ou peut être amené par traction à la bande de transport (2), **caractérisé en ce que** le corps de raclage est pourvu, en outre, d'un élément de levage (3b), qui est disposé, dans le corps de raclage (4), à distance de l'élément de support (3a), et qui porte le corps de raclage (4), quand celui-ci est poussé dans la direction de marche de la bande.

2. Dispositif selon la revendication 1, **caractérisé en ce que** l'élément de levage (3b) est formé à partir d'un câble d'acier et / ou d'une chaîne métallique.

3. Dispositif selon revendication 1 ou 2, **caractérisé en ce que** l'élément de support (3a) est disposé dans un réceptacle (7, 7ʹ), qui est formé dans le corps de raclage (4).

4. Dispositif selon l'une des revendications 1 à 3, **caractérisé en ce que** l'élément de levage (3b) est disposé dans un réceptacle (7, 7ʹ), qui, formé dans le corps de raclage (4), est disposé à distance de l'élément de support (3a), ou dans un réceptacle (7, 7ʹ), qui est associé à l'élément de support (3a).

5. Dispositif selon revendication 3 ou 4, **caractérisé en ce que** le réceptacle (7) est réalisé sous la forme d'un canal ouvert.

6. Dispositif selon l'une des revendications 1 à 5, **caractérisé en ce que** l'élément de support (3a) est pourvu, dans la direction de traction, d'un ressort de traction et / ou d'un ressort à gaz (6a).

7. Dispositif selon l'une des revendications 1 à 6, **caractérisé en ce que** l'élément de support (3a) et / ou l'élément de levage (3b) est / sont fixé(s) sur un élément de fixation (5), qui présente un point destiné à la rupture.

8. Dispositif selon l'une des revendications 1 à 7, **caractérisé en ce que** le corps de raclage (4) est fabriqué en matière élastique à la flexion, de préférence en matière plastique et / ou en élastomère.

9. Dispositif selon l'une des revendications 1 à 8, **caractérisé en ce que** le corps de raclage (4) est dote d'au moins deux zones marginales, orientées vers la bande de transport (2), au moins la zone marginale, supérieure ou au moins la première zone marginale, vue dans le sens de marche de la bande de transport, étant formée par un ou plusieurs élément(s) de raclage (13a, 13a'), qui présente(nt) une résistance à l'usure plus élevée que celle du matériau du corps de raclage (4).

10. Dispositif selon la revendication 9, **caractérisé en ce qu'**au moins un élément de raclage (13a, 13a') est pourvu d'au moins un élément de ressort (4c).

11. Dispositif selon la revendication 10, **caractérisé en ce que** l'élément de ressort (4c) est doté d'au moins une section en forme de boucle (4a, 4b, 4e).

12. Dispositif selon la revendication 11, **caractérisé en ce que** la section en forme de boucle (4a, 4b, 4e) de l'élément de ressort (4c) est traversée par l'élément de support (3a), l'élément de levage (3b) ou par un élément de liaison en forme de barre ou de câble (3c).

13. Dispositif selon l'une des revendications 1 à 12, **caractérisé en ce que** le corps de raclage (4) est doté de plusieurs éléments de raclage (13a, 13a'), qui définissent des bords de raclage (13.1) et présentent une résistance à l'usure plus élevée que celle du matériau du corps de raclage (4), sachant que les éléments de raclage (13a, 13a') sont conçus ou disposés de sorte que les bords de raclage (13.1) d'éléments de raclage (13a, 13a') voisins se chevauchent partiellement.

14. Dispositif selon la revendication 13, **caractérisé en ce que** les bords de raclage (13.1) d'éléments de raclage (13a, 13a') voisins ou successifs sont disposés en gradins, les uns par rapport aux autres.

15. Dispositif selon la revendication 14, **caractérisé en ce que** les bords de raclage (13.1) d'éléments de raclage (13a, 13aʹ) successifs sont disposés alternativement en saillie avant et en saillie arrière, les uns par rapport aux autres.
